# FASCICULE DE BREVET EUROPEEN

(11) **EP 0 702 174 B1**
(45) Date de publication et mention de la délivrance du brevet: **03.07.2002**
(21) Numéro de dépôt: 95420251.1
(22) Date de dépôt: 06.09.1995
(51) Int. Cl.: F16J 15/12

(54) **Joint d'étanchéité plat métal-élastomère**
Flachdichtung aus Metall-Elastomer-Verbrudwerkstoff
Flat Metal-elastomer sealing gasket

(30) Priorité: 13.09.1994 FR 9411110
(43) Date de publication de la demande: 20.03.1996
(73) Titulaire: CURTY PAYEN S.A., 69800 Saint-Priest (FR)
(72) Inventeur: Tronel, Tanguy, F-69006 Lyon (FR)
(74) Mandataire: Maureau, Philippe

(56) Documents cités:
- EP-A- 0 557 918
- WO-A-93/06391
- CH-A- 279 994
- US-A- 3 352 564
- US-A- 3 794 333
- US-A- 4 852 893

## Description

L'invention concerne un joint d'étanchéité plat métal-élastomère, notamment un joint de culasse, comme décrit dans le préambule de la revendication 1.

Un tel joint est utilisé dans un moteur pour réaliser l'étanchéité entre le bloc moteur et la culasse, tant au niveau de chaque chambre de combustion qu'au niveau des passages d'huile et d'eau à proximité de ces chambres. Le joint de culasse d'un moteur comporte alors différentes ouvertures pour les chambres de combustion, les passages d'huile et d'eau et pour les vis de fixation.

Il existe plusieurs types de joints de culasse. Les types les plus répandus sont les joints fibreux et les joints métalliques. Les joints fibreux comportent une âme métallique et une garniture à base de matériaux fibreux tels de l'amiante. Etant donné l'évolution des législations dans la plupart des pays, l'utilisation d'amiante est de plus en plus réglementée et ce type de joint disparaît.

Parmi les joints métalliques, on distingue les joints multicouches et les joints métal-élastomère. Les premiers sont en général constitués d'une plaque centrale, qui définit l'épaisseur du joint, et de deux plaques nervurées, placées de part et d'autre de la plaque centrale, pour réaliser l'étanchéité aussi bien au niveau des chambres de combustion (anneaux de feu) qu'au niveau des passages de fluide -eau et huile-. Les deux plaques nervurées sont destinées à être au contact du bloc moteur et de la culasse. Les nervures qu'elles comportent sont élastiques, afin de pouvoir créer une surpression locale et progressive sur le plan de joint, et ainsi de permettre une bonne étanchéité. Cependant, ces nervures ne sont pas capables d'absorber les rugosités du bloc moteur et de la culasse au niveau du plan de joint. Afin de réaliser cette micro-étanchéité, une fine couche d'élastomère (environ 25 µm) revêt les plaques nervurées et parfait alors l'étanchéité du joint.

Ces joints métalliques multicouches nécessitent un bloc moteur et une culasse présentant, au niveau du plan de joint, un bon état de surface, car la fine couche d'élastomère ne peut absorber que de faibles rugosités. En outre, la fabrication de ces joints fait appel à des techniques qui ne sont pas encore éprouvées et leur prix de revient est encore élevé.

Les joints métal-élastomère sont, quant à eux, constitués d'une plaque centrale métallique, d'anneaux de feu métalliques nervurés, de cordons élastomères moulés sur la plaque centrale au niveau des passages de fluide -huile, eau- ainsi que de butées de serrage. Dans de tels joints, les pressions de contact sont localisées aux endroits où une étanchéité est nécessaire : anneaux de feu et cordon d'élastomère. Cependant, une différence de raideur entre les anneaux de feu métallique et les cordons d'élastomère rend nécessaire la présence de butées de serrage, destinées à limiter la compression de l'élastomère et les flexions de la culasse.

Ces joints de culasse métal-élastomère permettent de réaliser une bonne étanchéité aux fluides et aux gaz. Grâce à la souplesse de l'élastomère et à la présence des butées, peu de charge est transmise au niveau des cordons d'élastomère et un bon potentiel de serrage est obtenu au niveau des anneaux de feu. Tout ceci permet d'avoir un serrage moindre, car il est concentré sur les anneaux de feu, ainsi qu'une faible relaxation de la structure.

Les butées sont en général constituées par une bande de métal soudée ou rivetée sur toute la périphérie de la plaque centrale. Cette bande de métal est obtenue par découpe d'une plaque métallique plane, ayant les mêmes dimensions sensiblement que la plaque centrale. Les chutes de métal sont très importantes, puisque tout le centre de la plaque découpée est inutilisable. Le prix du joint est donc relativement élevé, puisque trois plaques de tôle de la taille du joint sont nécessaires pour réaliser un seul joint.

Les joints de culasse métal-élastomère connus présentent parfois des problèmes de tenue du cordon d'élastomère sur l'âme du joint. Il arrive alors que ce cordon soit arraché, supprimant ainsi toute étanchéité.

Par ailleurs des joints de culasse correspondant à la définition donnée dans le préambule de la revendication 1 sont connus du document EP-A-0 603 318 ou US-A-4 852 893.

Le but de l'invention est de fournir un joint de culasse métal-élastomère permettant de réaliser une bonne étanchéité, une bonne reprise et une bonne tenue du joint ainsi qu'une bonne micro-étanchéité, avec des butées réalisables à moindre coût. Les butées étant destinées à limiter la compression des cordons d'élastomère du joint, elles doivent être aussi rigides que possible (aucune élasticité).

A cet effet, le joint métal-élastomère, notamment joint d'étanchéité plat, qu'elle propose comporte, de manière connue :
- une âme de joint présentant au moins une ouverture permettant le passage d'un fluide et constituée par au moins une plaque,

L'invention concerne ainsi un joint tel que décrit dans le préambule de la revendication 1 et caractérisé en ce que les butées sont rigides et sont constituées par des bossages, débouchant ou non, formés dans l'âme métallique, lesdits bossages saillant perpendiculairement au plan de joint sur une hauteur inférieure à celle du cordon près duquel ils sont réalisés et étant noyés dans une couche de matériau de remplissage liée au cordon d'étanchéité.

De cette façon, I'âme du joint coopère avec la couche de matériau de remplissage pour assurer la fonction de butée permettant de limiter la compression de l'élastomère ainsi que d'empêcher une flexion de la culasse. De plus, le fait qu'un matériau de remplissage recouvre un bossage permet une excellente tenue de ce matériau sur l'âme du joint car ce bossage constitue un point d'ancrage et puisque le cordon d'élastomère est lié au matériau de remplissage, on obtient une meilleure tenue du cordon sur l'âme par rapport à un cordon réalisé sur une surface lisse de l'art antérieur. Enfin, cette configuration est facile à réaliser. En effet, peu d'opérations sont nécessaires pour former à la fois les butées et le cordon d'étanchéité : l'âme du joint subit tout d'abord une opération d'emboutissage, puis le cordon d'élastomère et la couche de remplissage sont moulés.

Afin de lier intimement la couche de remplissage et le cordon d'élastomère, ceux-ci sont avantageusement réalisés dans un seul et même matériau. Il est ainsi possible de n'avoir qu'une seule opération de moulage.

Cependant, pour garantir une excellente étanchéité et obtenir aussi par exemple une bonne isolation thermique, le cordon d'élastomère et la couche de remplissage peuvent être réalisés dans deux matériaux distincts, l'un servant de matériau de remplissage pour les butées, l'autre formant le cordon d'étanchéité. Le matériau de remplissage peut alors servir d'isolant thermique, tout en permettant d'accroître la rigidité des bossages, et le cordon assurer l'étanchéité. Le fait d'avoir deux matériaux distincts permet d'optimiser la structure et de remplir au mieux chaque fonction.

L'âme du joint peut être constituée d'une ou de deux plaques. Dans le premier cas, avantageusement, les butées rigides font saillie sur les deux faces de cette plaque, dans le second cas, chaque plaque ne présente des butées rigides saillantes que sur sa face opposée à l'autre plaque. Les deux plaques sont bien sûr empilées. Il est envisageable d'empiler plus de deux plaques, auquel cas seules les plaques extérieures comporteraient sur leur face extérieure des butées rigides, mais ceci augmenterait le coût du joint sans apporter d'amélioration.

Les butées rigides sont de préférence des bossages débouchant. Dans ce cas, les butées sont en forme de cheminée circulaire dont la paroi est sensiblement perpendiculaire au plan de l'âme du joint. Cette forme permet de réaliser des butées ne présentant aucune élasticité.

Les butées rigides sont avantageusement obtenues par perforation de l'âme du joint.

De toute façon, l'invention sera bien comprise à l'aide de la description qui suit, en référence au dessin schématique annexé représentant, à titre d'exemples non limitatifs, quelques formes d'exécution d'un joint métal-élastomère selon l'invention :
Figure 1 est une vue en plan d'un joint de culasse selon l'invention ;
Figure 2 est une vue en perspective d'une partie du joint de la figure 1 ;
Figure 3 est une vue en coupe selon la ligne III-III de la figure 1 ;
Figure 4 est une vue analogue à la vue de la figure 3 pour une autre forme d'exécution.

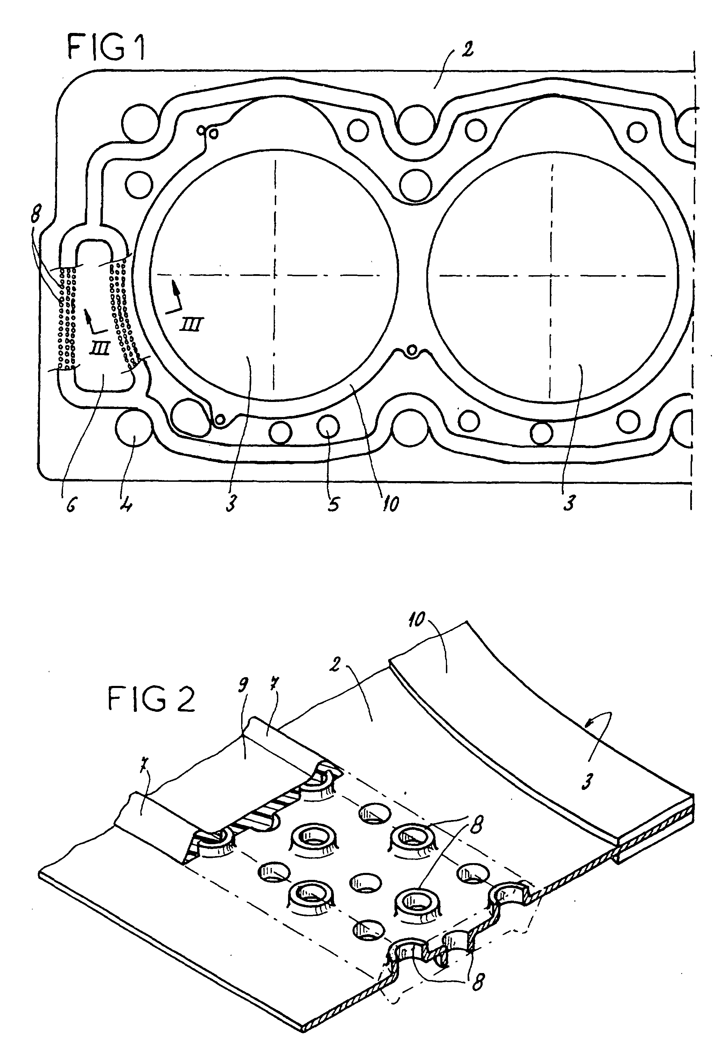

Le joint représenté sur les figures 1 à 3 est un joint de culasse selon l'invention. Il comprend une âme métallique 2 en acier, de forme générale rectangulaire, possédant deux ouvertures centrales 3 correspondant aux chambres de combustion. Autour de ces ouvertures centrales 3, le joint comporte également un certain nombre d'ouvertures, dont celles 4 destinées au passage de vis de centrage et/ou de serrage, dont celles 5 destinées au passage du liquide de refroidissement du moteur et dont celles 6 destinées au passage du liquide de lubrification.

L'étanchéité au niveau des ouvertures centrales 3 est réalisée, de façon connue en soi, par des anneaux de feu constitués par des culots métalliques 10 sertis sur le bord de ces ouvertures.

L'étanchéité au niveau des ouvertures 5, 6 respectivement pour les passages des liquides de refroidissement et de lubrification, est réalisée à l'aide de cordons en élastomère 7 moulés.

Dans la forme de réalisation représentée aux figures 1 à 3, l'âme 2 du joint est constituée par une seule plaque 2 réalisée dans une tôle en acier. En plus des ouvertures 3, 4, 5, 6 décrites ci-dessus, la plaque 2 comporte des butées rigides 8 en forme de cheminée cylindrique circulaire dont la paroi est sensiblement perpendiculaire au plan de joint. Ces butées 8 font saillie alternativement de chaque côté de la plaque 2. Elles peuvent être obtenues, par exemple, par emboutissage ou par perforation.

La hauteur de ces butées 8 est déterminée en fonction de la compression nécessaire aux cordons en élastomère 7 pour assurer une bonne étanchéité. Sur les figures 1 à 3, ces butées 8 sont noyées dans une couche de matériau élastomère 9, liée intimement aux cordons 7 et les reliant. Dans ce cas, les butées 8 sont placées au plus près des cordons 7 assurant l'étanchéité. Les cordons 7 sont plus hauts que la couche 9 et la hauteur des butées 8 correspond sensiblement à la hauteur de la couche 9.

La couche d'élastomère servant à remplir l'espace entre les butées 8 est réalisée dans le même matériau que le cordon 7, mais elle ne remplit aucune fonction d'étanchéité. Cet élastomère, une fois confiné, devient rigide et contribue à augmenter la rigidité des butées 8. D'autre part, l'élastomère de la couche 9 servant de matériau de remplissage et l'élastomère servant de cordon d'étanchéité sont moulés au cours d'une même opération de moulage et forment donc un ensemble intimement lié. La tenue de ce bloc d'élastomère sur la plaque 2 est excellente grâce aux butées 8.

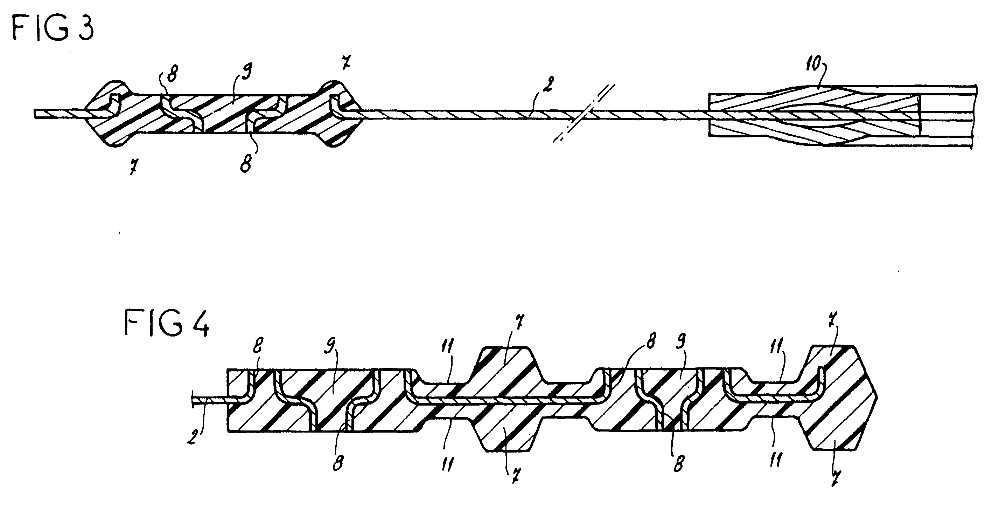

La figure 4 représente une autre forme d'exécution d'un joint de culasse selon l'invention. Cette forme montre bien qu'une partie de l'élastomère contribue à réaliser l'étanchéité alors que l'autre partie sert de matériau de remplissage participant à accroître la rigidité des butées 8.

Dans cette forme d'exécution, on retrouve une plaque 2, des butées 8 en forme de cheminée, deux cordons d'élastomère 7 et deux couches de remplissage 9. Entre les couches de remplissage 9 et les cordons d'étanchéité 7, des rainures 11. Lorsque les cordons d'élastomère 7 sont comprimés, ces rainures 11 permettent une meilleure déformation du cordon 7 et favorisent ainsi une meilleure étanchéité.

Dans cette forme de réalisation, il est tout à fait envisageable de choisir deux matériaux distincts pour former les cordons 7 et les couches 9. Les couches 9 pourraient alors être réalisées dans un matériau plastique.

Les butées 8 des deux joints de culasse décrits permettent de réaliser une parfaite étanchéité aux fluides (reprise et micro-étanchéité) en assurant une limitation de la compression du cordon 7 en n'utilisant qu'une seule plaque métallique 2. Elles n'assurent pas la fonction étanchéité mais permettent au cordon 7 de remplir parfaitement celle-ci, tout en empêchant une flexion de la culasse (non représentée) grâce à leur répartition sur l'âme du joint. Enfin, ces butées 8 sont aussi rigides que possible, surtout grâce à la présence de matériau de remplissage confiné, et présentent une élasticité quasi nulle.

L'ensemble formé par les cordons d'étanchéité, la couche de remplissage et les butées de l'âme du joint est compact et homogène et il permet d'éviter tout problème de désadhérisation du cordon tel que l'on en rencontre avec des moulages classiques de l'art antérieur.

Les butées noyées dans le matériau de remplissage protègent les cordons d'étanchéité. Elles présentent aussi des propriétés isolantes au niveau de la transmission de chaleur, contrairement au butées de serrage métalliques de l'art antérieur décrites au préambule, ainsi que des propriétés d'amortissement des vibrations mécaniques.

Lorsque les matériaux constitutifs du remplissage des butées et des cordons d'étanchéité sont identiques, il est possible de réaliser en une seule opération de moulage le remplissage des butées et la formation des cordons d'étanchéité.

Comme il va de soi, l'invention ne se limite pas aux formes d'exécution représentées au dessin et décrites ci-dessus à titre d'exemples non limitatifs ; elle en embrasse au contraire toutes les variantes.

Ainsi, par exemple, les butées rigides pourraient être constituées par un simple bossage, non débouchant. D'autres formes de bossages sont bien sûr envisageables, telle par exemple une forme oblongue.

Au lieu de ne comporter qu'une seule plaque, l'âme du joint pourrait comporter deux plaques, placées l'une sur l'autre. Chacune de ces plaques comporterait alors des butées qui feraient saillie de la face opposée à l'autre plaque.

Enfin, quelle que soit la forme des butées, certaines d'entre elles peuvent ne pas être noyées dans une couche de remplissage. Il est possible, sur un même joint, d'avoir des butées rigides noyées dans une couche de remplissage et d'autres, non noyées, placées à côté d'un cordon d'élastomère, ou bien à la périphérie de l'âme du joint.

## Revendications

1. Joint d'étanchéité plat métal-élastomère, notamment joint de culasse, comprenant:
- une âme (2) constituée par au moins une plaque métallique avec des ouvertures (3, 5, 6) pour le passage d'organes de fixation et de serrage ainsi que pour le passage de fluides incluant des gaz chauds et accessoirement des fluides de refroidissement ou de lubrification,
- autour de chaque ouverture (3) pour le passage des gaz chauds, un anneau métallique (10), fixé ou serti sur le bord de l'ouverture,
- au moins un cordon (7) en élastomère saillant de chaque face et séparant les ouvertures pour fluides (3, 5, 6) des ouvertures pour les organes de fixation et de serrage, ce cordon assurant par compression élastique l'étanchéité vers l'extérieur des ouvertures(5, 6) pour fluides,
- et des moyens de butée limitant la compression du ou des cordons (7) lors du serrage du joint plat, par exemple entre bloc moteur et culasse,
**caractérisé en ce que les** moyens de butée sont rigides et sont constitués par des bossages (8), débouchant ou non, formés dans l'âme métallique (2), lesdits bossages saillant perpendiculairement au plan de joint sur une hauteur inférieure à celle du cordon (7) près duquel ils sont réalisés et étant noyés dans une couche (9) de matériau de remplissage liée au cordon d'étanchéité (7).

2. Joint métal-élastomère selon la revendication 1, **caractérisé en ce que** le cordon d'élastomère (7) et la couche de remplissage (9) sont réalisés dans un seul et même matériau.

3. Joint métal-lastomère selon la revendication 1, **caractérisé en ce que** le cordon d'élastomère (7) et la couche de remplissage (9) sont réalisés dans deux matériaux distincts.

4. Joint métal-élastomère selon l'une des revendications 1 à 3, **caractérisé en ce que** l'âme du joint (2) est constituée d'une seule plaque et **en ce que** les butées rigides (8) font saillie sur les deux faces de cette plaque.

5. Joint métal-élastomère selon l'une des revendications 1 à 3, **caractérisé en ce que** l'âme (2) du joint est constituée de deux plaques placées l'une sur l'autre et **en ce que** chaque plaque (2) ne présente des butées rigides saillantes que sur sa face opposée à l'autre plaque.

6. Joint métal-élastomère selon l'une des revendications 1 à 5, **caractérisé en ce que**, au moins une butée rigide (8) est en forme de cheminée circulaire, dont la paroi est sensiblement perpendiculaire au plan de l'âme (2) du joint.

7. Joint métal-élastomère selon l'une des revendications 1 à 6, **caractérisé en ce que** les butées (8) de serrage sont obtenues par perforation de l'âme du joint.

8. Joint plat métal élastomère selon la revendication 1, **caractérisé en ce que** les bossages (8) formant butées rigides sont réalisés dans les zones de l'âme (2) correspondant à l'intervalle entre deux cordons d'étanchéité (7) cheminant parallèlement l'un à l'autre, au moins d'un côté de ladite âme.

## Patentansprüche

1. Flachdichtung aus Metall-Elastomer-Verbundwerkstoff, insbesondere eine Zylinderkopfdichtung, umfassend:
- einen Kern (2), der aus mindestens einer Metallplatte mit Öffnungen (3, 5, 6) für das Hindurchführen von Mitteln zum Befestigen und zum Zusammenpressen sowie für den Durchlauf von Flüssigkeiten, einschließlich heisser Gase, und außerdem von Kühl- oder Schmierflüssigkeiten besteht,
- um jede Öffnung (3) für den Durchlauf heisser Gase einen Metallring (10), der am Rand der Öffnung befestigt oder gefalzt ist,
- mindestens einen Wulst (7) aus Elastomer, der aus jeder Seite herausragt und die Öffnungen für Flüssigkeiten (3, 5, 6) von den Öffnungen für die Mittel zum Befestigen und zum Zusammenpressen trennt, wobei dieser Wulst mittels elastischer Kompression die Abdichtung nach außen der Öffnungen (5, 6) für Flüssigkeiten gewährleistet,
- sowie Anschlagmittel, die die Kompression des Wulstes oder der Wulste (7) beim Zusammenpressen der Flachdichtung begrenzen, zum Beispiel zwischen Motorblock und Zylinderkopf,
**dadurch gekennzeichnet, dass** die Anschlagmittel starr sind und durch Vorsprünge (8), durchlocht oder nicht, gebildet sind, die im Metallkern (2) geformt sind, wobei diese Vorsprünge senkrecht zur Dichtungsfläche hervorstehen mit einer Höhe, die niedriger ist als die des Wulstes (7), in dessen Nähe sie gebildet sind, und wobei sie in einer Schicht (9) von Füllmaterial versenkt liegen, die mit dem Dichtungswulst (7) verbunden ist.

2. Dichtung aus Metall-Elastomer-Verbundwerksktoff nach Anspruch 1, **dadurch gekennzeichnet, dass** der Elastomer-Wulst (7) und die Füllschicht (9) aus einem einzigen und gleichen Material bestehen.

3. Dichtung aus Metall-Elastomer-Verbundwerkstoff nach Anspruch 1, **dadurch gekennzeichnet, dass** der Elastomer-Wulst (7) und die Füllschicht (9) aus zwei verschiedenen Materialien bestehen.

4. Dichtung aus Metall-Elastomer-Verbundwerkstoff nach einem der Ansprüche 1 bis 3, **dadurch gekennzeichnet, dass** der Dichtungskern (2) aus einer einzigen Platte besteht und dadurch, dass die starren Anschläge (8) zu beiden Seiten dieser Platte herausragen.

5. Dichtung aus Metall-Elastomer-Verbundwerkstoff nach einem der Ansprüche 1 bis 3, **dadurch gekennzeichnet, dass** der Dichtungskern (2) aus zwei aufeinanderliegenden Platten besteht, und dadurch, dass jede Platte (2) starre herausragende Anschläge nur auf der Seite aufweist, die von der anderen Platte abgewendet ist.

6. Dichtung aus Metall-Elastomer-Verbundwerkstoff nach einem der Ansprüche 1 bis 5, **dadurch gekennzeichnet, dass** mindestens ein starrer Anschlag (8) die Form eines kreisförmigen Kamins besitzt, dessen Wand im wesentlichen senkrecht zur Ebene des Dichtungskerns (2) steht.

7. Dichtung aus Metall-Elastomer-Verbundwerkstoff nach einem der Ansprüche 1 bis 6, **dadurch gekennzeichnet, dass** die Anschläge (8) mit Funktion beim Zusammenpressen durch Perforierung des Dichtungskerns erhalten werden.

8. Flachdichtung aus Metall-Elastomer-Verbundwerkstoff nach Anspruch 1, **dadurch gekennzeichnet, dass** die Vorsprünge (8), die starre Anschläge bilden, in den Bereichen des Kerns (2) gebildet sind, die dem Zwischenraum zwischen zwei Dichtungswulsten (7) entsprechen, die parallel zueinander verlaufen, zumindest auf einer Seite dieses Kerns.

## Claims

1. Flat metal-elastomer gasket, in particular a cylinder head gasket, comprising:
- a core (2) consisting of at least one metal plate with openings (3, 5, 6) for the passage of fastening and tightening devices as well as for the passage of fluids, including hot gases, and secondarily cooling or lubricating fluids,
- around each opening (3) for the passage of hot gases, a metal ring (10) fastened or crimped onto the edge of the opening,
- at least one bead (7) made of elastomer projecting from each face and separating the openings for fluids (3, 5, 6) from the openings for fastening and tightening devices, this bead ensuring by elastic compression that fluids do not leak outwards from the openings (5, 6),
- and stopping means limiting the compression of the bead or beads (7) when the flat gasket is tightened, for example between the engine block and the cylinder head,
**characterized in that** the stopping means are rigid and consist of raised embossments (8), with or without a through passage, formed in the metal core (2), the said embossments projecting perpendicular to the plane of the gasket over a height less than that of the bead (7) close to which they are produced and being embedded in a layer (9) of filling material connected to the sealing bead (7).

2. Metal-elastomer gasket according to claim 1, **characterized in that** the elastomeric bead (7) and the filling layer (9) are made of one and the same material.

3. Metal-elastomer gasket according to claim 1, **characterized in that** the elastomeric bead (7) and the filling layer (9) are made of two distinct materials.

4. Metal-elastomer gasket according to one of claims 1 to 3, **characterized in that** the core (2) of the gasket consists of a single plate and **in that** the rigid stops (8) project on both faces of this plate.

5. Metal-elastomer gasket according to one of claims 1 to 3, **characterized in that** the core (2) of the gasket consists of two plates placed one on the other and **in that** each plate (2) has projecting rigid stops only on the face opposite the other plate.

6. Metal-elastomer gasket according to one of claims 1 to 5, **characterized in that** at least one rigid stop (8) is in the form of a circular duct, of which the wall is substantially perpendicular to the plane of the core (2) of the gasket.

7. Metal-elastomer gasket according to one of claims 1 to 6, **characterized in that** the tightening stops (8) are. obtained by perforating the core of the joint.

8. Flat metal-elastomer gasket according to claim 1, **characterized in that** the embossments (8) forming rigid stops are produced in zones of the core (2) corresponding to the interval between two sealing beads (7) passing parallel to each other, at least on one side of the said core.
